## Europäisches Patentamt
## European Patent Office
## Office européen des brevets

(11) Veröffentlichungsnummer: **0 259 558 B1**

# EUROPÄISCHE PATENTSCHRIFT

(45) Veröffentlichungstag der Patentschrift: **22.04.92**

(21) Anmeldenummer: **87109681.4**

(22) Anmeldetag: **06.07.87**

(51) Int. Cl.5: **G01L 5/22**, G01L 1/00, G01L 1/12

(54) **Kraftmesser zur Messung von mechanischen Spannungen in einem etwa bolzenartigen Bauelement.**

(30) Priorität: **10.09.86 DE 3630749**

(43) Veröffentlichungstag der Anmeldung:
**16.03.88 Patentblatt 88/11**

(45) Bekanntmachung des Hinweises auf die
Patenterteilung:
**22.04.92 Patentblatt 92/17**

(84) Benannte Vertragsstaaten:
**DE FR GB IT**

(56) Entgegenhaltungen:
**EP-A- 0 070 442**
**EP-A- 0 199 067**
**DE-A- 1 131 033**
**DE-A- 1 900 194**
**US-A- 4 063 157**

**PATENT ABSTRACTS OF JAPAN Band 10, Nr.19 (P-423)(2076), 24. Januar 1986; & JP-A-60 173 433**

**PATENT ABSTRACTS OF JAPAN Band 11, Nr. 177 (P-583)(2624), 6 Juni 1987; & JP-A-62 6129**

**PATENT ABSTRACTS OF JAPAN** Band 10, Nr. **154 (P-463)(2210), 6. Juni 1986; & JP-A-61 8639**

(73) Patentinhaber: **ROBERT BOSCH GMBH**
**Postfach 30 02 20**
**W-7000 Stuttgart 30(DE)**

(72) Erfinder: **Dobler, Klaus, Dr.-Ing.**
**Bettäckerstrasse 12**
**W-7016 Gerlingen(DE)**
Erfinder: **Hachtel, Hansjörg, Dipl.-Ing.**
**Buchenstrasse 4**
**W-7251 Weissach(DE)**
Erfinder: **Romes, Roman**
**Lindenstrasse 29**
**W-7259 Friolzheim(DE)**

## Beschreibung

### Stand der Technik

Die Erfindung geht aus von einem Kraftmesser nach der Gattung des Hauptanspruchs. Es ist z.B aus der EP-A-0 070 442 bekannt, daß ferromagnetische Materialien ihre Permeabilität in der Richtung, in die Zug- oder Druckkräfte einwirken, ändern. Mit Hilfe von Transformatorgebern, deren Kerne aus ferromagnetischem Material bestehen und auf denen die Primär- und Sekundärspulen aufgebracht sind, kann die Änderung der Permeabilität gemessen werden. Dies hat aber den Nachteil, daß die magnetischen Eigenschaften des Meßobjektes (Kraftmeßbolzen) die Meßwertempfindlichkeit bestimmen. Diese bildet sich tendenziell bei Stählen mit hohen Festigkeitswerten gering aus.

### Vorteile der Erfindung

Der erfindungsgemäße Kraftmesser mit den kennzeichnenden Merkmalen des Anspruchs 1 hat demgegenüber den Vorteil, daß das Meßsignal unabhängig von den Materialeigenschaften des Kraftmeßbolzens gewinnbar ist. Er ermöglicht bei relativ einfacher Bauweise eine große Signalausbeute. Ein Transformatorgeber ist nicht mehr notwendig; die Anzahl der Spulen kann auf zwei begrenzt sein. Bei Verwendung von hohen Meßfrequenzen kann der sogenannte Skineffekt in der Oberfläche der magnetoelastischen Schicht ausgenützt werden.

Durch die in den abhängigen Ansprüchen aufgeführten Maßnahmen sind vorteilhafte Weiterbildungen und Verbesserungen des im Anspruch 1 angegebenen Kraftmessers möglich. Besonders vorteilhaft ist seine Anwendung als Kraftmeßbolzen in elektrohydraulischen Hubwerksregeleinrichtungen von landwirtschaftlichen Arbeitsfahrzeugen. Weitere vorteilhafte Ausgestaltungen ergeben sich aus der Beschreibung und der Zeichnung.

### Zeichnung

Ein Ausführungsbeispiel der Erfindung ist in der Zeichnung dargestellt und in der nachfolgenden Beschreibung näher erläutert. Es zeigen Figur 1 einen Längsschnitt durch einen Kraftmesser in vereinfachter Darstellung, wie er in einer elektrohydraulischen Hubwerksregeleinrichtung eines Traktors zur Messung der Zugkraft im Lenker verwendbar ist, Figur 1a einen Schnitt in Richtung A nach Figur 1, Figur 2 eine Schaltungsanordnung zum Betreiben des Kraftmessers, Figur 3 eine Abwandlung des Ausführungsbeispiels und Figur 3a einen Schnitt in Richtung B nach Figur 3.

### Beschreibung des Ausführungsbeispiels

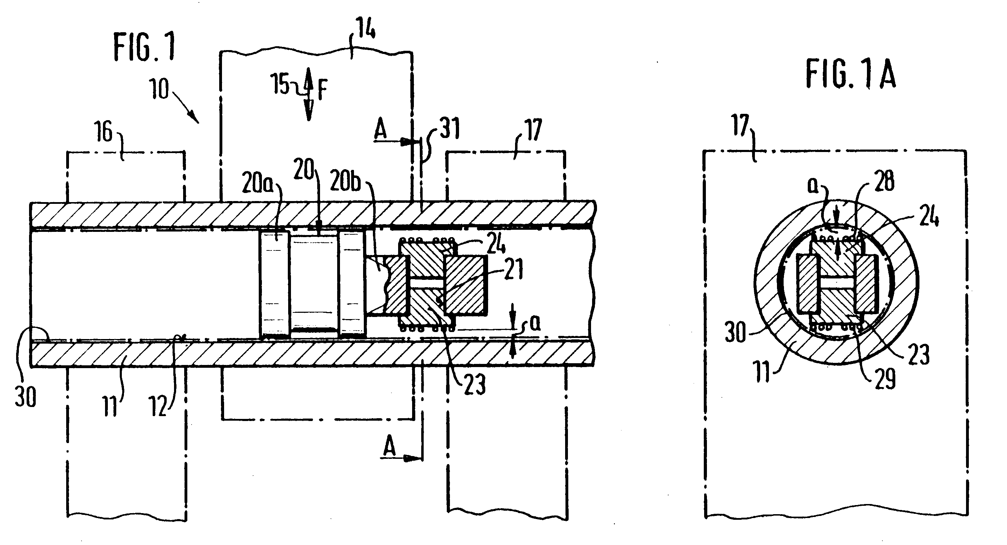

Die Figur 1 zeigt in etwas vereinfachter Darstellung einen magnetoelastischen Kraftmesser 10, der im wesentlichen als rohrförmiger Bolzen 11 ausgebildet ist. Der Hohlraum im Bolzen 11 ist als durchgehende Bohrung 12 dargestellt; er kann aber auch als Sackbohrung ausgebildet sein.

Auf dem Bolzen 11 ist in an sich bekannter Weise ein Unterlenker 14 eines bei Traktoren üblichen Dreipunktgestänges schwenkbar gelagert, der in Pfeilrichtung 15 eine Zugkraft oder Druckkraft F auf den Bolzen 11 ausübt. Der Bolzen 11 stützt sich beidseitig vom Unterlenker 14 in gehäusefesten Lageraugen 16, 17 des Traktors ab, so daß auf jedes Lagerauge 16, 17 im wesentlichen die halbe Zug- oder Druckkraft F/2 wirkt.

Der Bolzen 11 bildet somit das federnde, biegeelastische Bauteil und besteht zu diesem Zweck aus einem geeigneten Material, das neben hoher Festigkeit auch eine geeignete Elastizität aufweist, wie z.B. Stahl. Der Bolzen 11 ist dabei mit soviel Spiel in den beiden Lageraugen 16, 17 in dem Unterlenker 14 ausgebildet, daß bei einer Durchbiegung unter Einwirkung der über den Unterlenker 14 angreifenden Kraft der Belastungsfall eines zweiseitig frei aufliegenden Trägers gilt. In dem Bolzen 11 befindet sich der Träger 20, der mit seinem zylindrischen Teil 20a fest in der Bohrung 12 angeordnet ist und dessen rechteckig geformter Teil 20b eine Bohrung 21 aufweist, in der die beiden nicht metallischen Kerne 23, 24 fixiert werden. Das zylindrische Teil 20a sitzt so fest in der Bohrung 12, daß keine Verschiebung in achsialer Richtung möglich ist. Auf den der Oberfläche der Bohrung 12 zugewandten Stirnseiten der Kerne 23, 24 ist je eine flache, spiralförmig gewickelte Spule 28, 29 aufgebracht. Die beiden Spulen 28, 29 liegen sich somit diametral gegenüber, bzw. sind um 180° zueinander versetzt angeordnet. Beide Spulen 28, 29 stehen mit einer an der Oberfläche der Bohrung 12 aufgebrachten magnetoelastischen Schicht 30 in Wirkverbindung. Die Spulen 28, 29 sind möglichst mit einem geringen Abstand in Richtung der Achse der Bohrung 12 zur Schicht 30 anzuordnen. Die Schicht 30 kann entweder nur im Bereich der Spulen 28, 29 ausgebildet sein, oder über die gesamte Länge des Bolzens 11. Die Schicht 30 besteht normalerweise aus einer Fe-Ni-Legierung mit einem Mischungsverhältnis von ungefähr 45/55.

Ferner kann die Schicht 30 galvanisch, plasmagespritzt oder in Dünn-oder Dickschichttechnik aufgebracht werden. Die Schicht 30 muß so fest auf dem Bolzen 11 appliziert sein, daß sie dessen Verformungen - u.a. begründet durch mechanischen Belastungen - vollständig mit vollzieht. Es können auch Bänder aus amorphen Metallen aufgeklebt sein. Die Spulen 28, 29 liegen ungefähr im Bereich einer Trennebene 31, die senkrecht zur Längsachse des Bolzens 11 verläuft und den Bolzen 11 im Bereich zwischen Unterlenker 14 und Lagerauge 17 schneidet, also in einer Scherzone. Die Zug- und Druckspannungen verlaufen hier in Richtung der Achse des Bolzens 11.

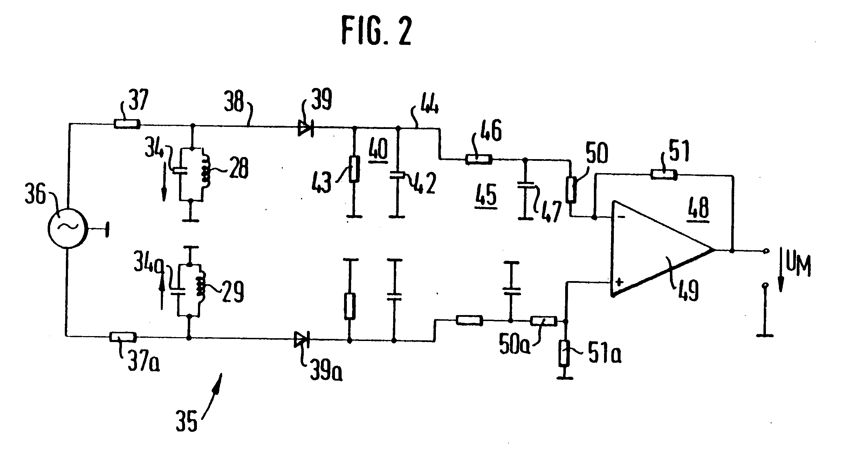

Die Spulen 28, 29 sind, wie in Figur 2 näher dargestellt, mit je einem Kondensator 34, 34a verbunden. Ein Kondensator und eine Spule bilden jeweils miteinander einen Parallelschwingkreis, der in eine elektrische Auswerteschaltung 35 geschaltet ist. Die Auswerteschaltung 35 ist als Differenzschaltung für die beiden Spulen 28, 29 dargestellt. Da beide Äste der Auswerteschaltung 35 aus gleichen Bauteilen bestehen, sind die Bauteile für die zweite Spule 29 und deren Schaltungsast mit a ergänzt.

Ein Wechselspannungsgenerator 36 speist die Spulen 28, 29 mit einer Wechselspannung. Die Parallelschaltung, wie oben beschrieben bestehend aus der Spule 28 und dem Kondensator 34, ist über einen Vorwiderstand 37 an den Wechselspannungsgenerator geschaltet. An der Spule 28 ist ein Signal 38 abnehmbar. Das Signal 38 wird über eine Diode 39, einer Siebschaltung 40, bestehend aus einem Siebkondensator 42 und einem Ableitwiderstand 43, zugeführt. Die gesiebte Signalspannung 44 gelangt über eine Tiefpaßanordnung 45, die aus einem Widerstand 46 und einem Kondensator 47 gebildet wird, in eine Verstärkeranordnung 48. Die Anordnung 48 ist als Differenzverstärkerschaltung mit Operationsverstärker 49 ausgebildet, deren Verstärkungsfaktor mit den Widerständen 50, 51 und 50a, 51a einstellbar ist. Dabei wird an den negativen Eingang des Operationsverstärkers 49 das Sensorsignal der Spule 28 und an den positiven Eingang des Operationsverstärkers 49 das Sensorsignal der zweiten Spule 29 zugeführt, wobei beide Signale um den gleichen Faktor verstärkt werden.

Das von den stromdurchflossenen Spulen 28, 29 erzeugte magnetische Wechselfeld erfaßt den Bolzen 11 im Bereich der Schicht 30, so daß die elektrischen Eigenschaften der Spulen 28, 29 beeinflußt werden. Zunächst bestimmt u.a. die Permeabilität der Schicht 30 die Induktivität der Spulen 28, 29. Da wie bereits oben erwähnt, die Permeabilität ferromagnetischer Stoffe unter Zug- oder Druckbelastung sich ändert, kann berührungsfrei der mechanische Spannungszustand des Bolzens 11 des Kraftmessers 10 gemessen werden. Die Induktivität der Spulen 28, 29 ist ferner eine Funktion des Abstandes der Spulen 28, 29 von der Oberfläche der Schicht 30. Dieser Abstand sollte vorzugsweise deshalb zur Erzielung eines hohen Nutzsignals möglichst klein sein.

Bei einer mechanischen Belastung über dem Unterlenker 14 ändert sich die Permeabilität im Bereich der beiden Spulen 28, 29 unterschiedlich, da im Bereich der einen Spule überwiegend eine Zugspannung, im Bereich der anderen überwiegend eine Druckspannung auftritt (oder umgekehrt). In welchem Spulenbereich überwiegend eine Zug- oder Druckspannung ausgebildet wird, hängt davon ab, ob man über den Unterlenker 14 eine Zug- oder Druckkraft einleitet. Diese unterschiedliche Veränderung der Permeabilität wird nun jeweils summarisch über die Wicklung der beiden Spulen 28, 29 erfaßt, was u.a. bewirkt, daß sich die Wechselstromwiderstände unterschiedlich groß ausbilden. Durch die Differenzbildung in der Auswerteschaltung 35 ergibt sich eine von Zug- bzw. Druckspannung richtungsabhängige Auswertespannung $U_M$, deren nahezu lineare Kennlinie punktsymmetrisch verläuft.

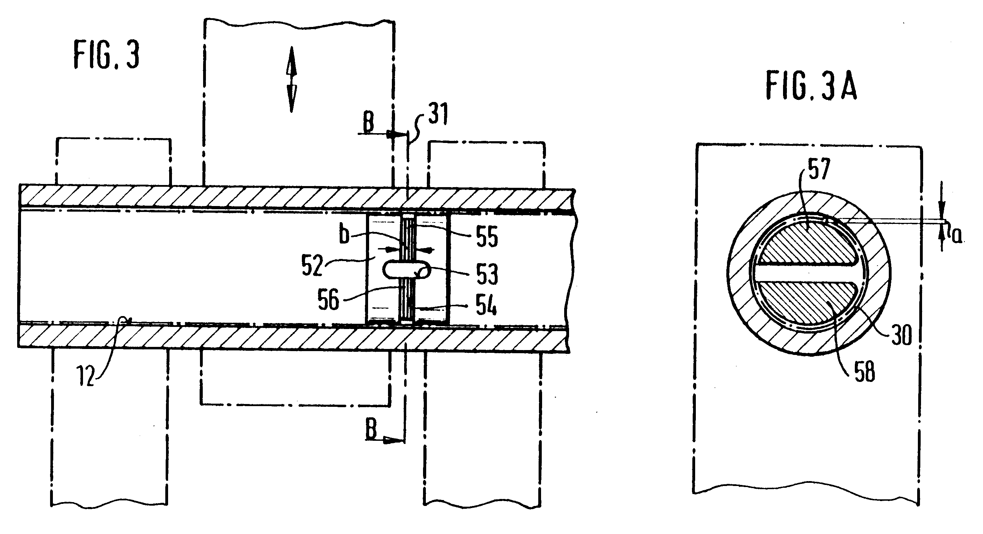

In Figur 3 ist eine Abwandlung des Ausführungsbeispiels nach Figur 1 dargestellt. Im Bereich der Trennebene 31 ist ein möglichst kurzes zylinderförmiges Bauteil 52 angeordnet. Es ist fest in der Bohrung 12 angeordnet, so daß keine Verschiebung in achsialer Richtung möglich ist. Das Bauteil 52 ist aus einem, vorzugsweise nicht metallischen Material gefertigt und weist eine durchgehende, quer zur Achse der Bohrung 12 verlaufende und diese schneidende Bohrung 53 auf. Ferner befindet sich am Bauteil 52 im Bereich der Bohrung 53 eine Ringnut 54. Durch die Bohrung 53 werden zwei im Querschnitt nahezu halbkreisförmige Spulenkörper 57, 58 gebildet. Statt der spiralförmig ausgebildeten Spulen 28, 29 sind in der Ringnut 54 und durch die Bohrung 53 Spulen 55, 56 gewickelt. Der Radius der beiden Spulenkörper 57, 58 ist dem Radius der Bohrung 12 angepaßt, wobei die Mittelpunkte jeweils in der Längsachse der Bohrung 12 liegen. Ferner ergibt sich durch die halbkreisförmige Ausbildung der Spulenkörper 57, 58 immer ein konstanter Abstand "a" zwischen den Spulen 55, 56 und der Schicht 30. Die Spulenbreite b kann dabei gering ausgebildet sein, so daß auch nur in sehr schmalen Zonen der Schicht 30 auftretende Permeabilitätsänderungen sicher erfaßt werden können. Es ist möglich, die Spulen 55, 56 sowohl quer zur Achsrichtung, wie in Figur 3 dargestellt, oder parallel zur Achsrichtung zu wickeln. Ferner ist es auch möglich, die beiden Spulen 55, 56 nicht nur diametral gegenüberliegend sondern auch in Achsrichtung des Bolzens 11 versetzt anzuordnen.

Der magnetoelastische Effekt und somit die Größe des Signals hängt von der stofflichen Beschaffenheit der Schicht 30 ab. Der Bolzen 11 kann somit bezüglich seiner Werkstoffauswahl völlig auf eine hohe Festigkeit und gute Korrosionsbeständigkeit abgestimmt werden. Gerade bei hochfestem Stahl mit guten Korrosionseigenschaften ist es meist so, daß er nur eine geringe magnetoelastische Empfindlichkeit aufweist. Es ist ferner möglich, die Spulen 28, 29 bzw. 55, 56 mit einem hochfrequenten Wechselstrom zu speisen, so daß der sogenannte Skineffekt, zur Meßsignalgewinnung herangezogen werden kann. Die dann von den Spulen erzeugten elektromagnetischen Wechselfelder gleich hoher Frequenz, werden bereits von der sehr dünnen Schicht 30 abgeschirmt. Dadurch wird das Meßsignal nur noch in vernachlässigbar geringer Weise vom Material des Bolzens 11 beeinflußt. Wird die Spule mit einer Frequenz von 0,5 MHz betrieben, so genügt ungefähr eine 30 μm starke Eisen-Nickel-Schicht um deren mechanischen Spannungszustand und damit die mechanische Belastung des Bolzens 11 bestimmen zu können.

Abhängig von den Einbauverhältnissen, ist es auch möglich, die Spulen auf den Spulenkörpern rechteckig oder oval auszugestalten. Es ist auch denkbar, mehrere z.B. kreisförmige Spulen in Reihenschaltung anzuordnen. Die Herstellung drahtgewickelter Spulen, deren Form sich wegen des konstanten Abstandes zur Oberfläche der Bohrung anpassen muß, ist dann relativ aufwendig. Die Spulen können aber auch auf elektrochemische Weise, z.B. geätzt oder aufgalvanisiert, oder in Druck- oder in Aufdampfverfahren aufgebracht werden.

**Patentansprüche**

1. Kraftmesser (10) mit einem bolzenartigen Bauelement (11) zur Messung von mechanischen Spannungen in dem Bauelement (11), das Teil einer Steuereinrichtung ist, wobei im Bauelement (11) ein Hohlraum (12) ausgebildet ist, in dem sich Meßspulen (28, 29) befinden, deren Meßsignale einer Auswerteschaltung (35) zugeführt werden, dadurch gekennzeichnet, daß der Hohlraum (12) wenigstens im Bereich der Spulen (28, 29) eine Beschichtung (30) aus magnetoelastischem Material aufweist, daß den unterschiedlichen mechanischen Belastungsbereichen jeweils mindestens eine Spule (28, 29) zugeordnet ist, daß die Spulen (28, 29) zusammen mit jeweils einem Kondensator (34, 34a) jeweils einen eigenen Parallelschwingkreis bilden, daß die Schwingkreise Teile der elektrischen Auswerteschaltung (35) sind, und daß die Widerstandswerte der der Spulen (28, 29) zugeordneten Vorwiderstände (37 bzw. 37a), die Induktivitäten und Ohmschen Widerstandswerte der Spulen (28, 29), die Kapazität der Kondensatoren (35 bzw. 35a) sowie die Frequenz der Wechselspannungsquelle (36) derart zusammen mit der Schicht (30) aufeinander abgestimmt sind, daß sich eine lineare Kennlinie ergibt.

2. Kraftmesser nach Anspruch 1 dadurch gekennzeichnet, daß die Spulen (28, 29) mindestens teilweise die Beschichtung (30) überdecken und in achsialer Richtung der Bohrung (12) einen konstanten Abstand zur Beschichtung (30) haben.

3. Kraftmesser nach Anspruch 1 und/oder 2 dadurch gekennzeichnet, daß die Geometrie der Spulen (28, 29) kreisförmig, oval oder rechteckig ist.

4. Kraftmesser nach einem der Ansprüche 1 bis 3, dadurch gekennzeichnet, daß die Spulen (55, 56) quer zur Achse des Bauelements (11) gewickelt sind.

5. Kraftmesser nach einem der Ansprüche 1 bis 4, dadurch gekennzeichnet, daß die magnetoelastische Beschichtung (30) vorzugsweise aus einer Fe-Ni-Legierung mit dem Mischungsverhältnis 45/55 besteht.

6. Kraftmesser nach einem der Ansprüche 1 bis 5, dadurch gekennzeichnet, daß jeweils eine gleich große Anzahl von Spulen (28, 29) Bereichen der Beschichtung (30) zugeordnet sind, die entgegengesetzten mechanischen Spannungen (Zug- bzw. Druckspannung) ausgesetzt sind.

7. Kraftmesser nach Anspruch 6, dadurch gekennzeichnet, daß der Kraftmesser zwei Spulen (28, 29) aufweist, die diametral gegenüberliegen.

8. Kraftmesser nach einem der Ansprüche 1 bis 7, dadurch gekennzeichnet, daß die Spulen (55, 56) je auf einem im Querschnitt halbkreisförmigen Spulenkörper (57, 58) aufgewickelt sind.

9. Kraftmesser nach einem der Ansprüche 1 bis 8, dadurch gekennzeichnet, daß die Spulen (28, 29 bzw. 55, 56) mit einer Wechselspannung hoher Frequenz (Hochfrequenz) gespeist sind.

**Claims**

1. Dynamometer (10), having a bolt-like component (11), for measuring mechanical stresses in the component (11), which is part of a control device, there being constructed in the component (11) a cavity (12) in which there are located measuring coils (28, 29) whose measuring signals are fed to an evaluation circuit (35), characterised in that the cavity (12) has at least in the region of the coils (28, 29) a coating (30) of magnetoelastic material, in that at least one coil (28, 29) is assigned in each case to the different mechanical loading ranges, in that the coils (28, 29) together in each case with a capacitor (34, 34a) form their own parallelresonant circuit in each case, in that the resonant circuits are parts of the electrical evaluation circuit (35), and in that the resistance values of the series resistors (37 or 37a) assigned to the coils (28, 29), the inductances and ohmic resistance values of the coils (28, 29), the capacitance of the capacitors (35 or 35a) and the frequency of the ac voltage source (36) are tuned together with the layer (30) with respect to one another in such a way that a linear characteristic curve is produced.

2. Dynamometer according to Claim 1, characterised in that the coils (28, 29) cover the coating (30) at least partially and have a constant distance with respect to the coating (30) in the axial direction of the bore (12).

3. Dynamometer according to Claim 1 and/or 2, characterised in that the geometry of the coils (28, 29) is circular, oval or rectangular.

4. Dynamometer according to one of Claims 1 to 3, characterised in that the coils (55, 56) are wound transverse to the axis of the component (11).

5. Dynamometer according to one of Claims 1 to 4, characterised in that the magnetoelastic coating (30) preferably consists of an Fe-Ni alloy having the mixing ratio 45/55.

6. Dynamometer according to one of Claims 1 to 5, characterised in that in each case an equally large number of coils (28, 29) are assigned to regions of the coating (30) which are exposed to oppositely directed mechanical stresses (tensile or compressive stress).

7. Dynamometer according to Claim 6, characterised in that the dynamometer has two coils (28, 29) which are situated diametrically opposite one another.

8. Dynamometer according to one of Claims 1 to 7, characterised in that the coils (55, 56) are each wound on a coil former (57, 58) of semicircular cross-section.

9. Dynamometer according to one of Claims 1 to 8, characterised in that the coils (28, 29 or 55, 56) are fed with an ac voltage of high frequency (radio frequency).

**Revendications**

1. Dynamomètre (10), avec un élément de construction (11) en forme d'axe, pour mesurer des contraintes mécaniques dans cet élément de construction (11) qui fait partie d'un dispositif de commande, cependant que dans l'élément de construction (11) est ménagé un espace creux (12) dans lequel se trouvent des bobines de mesure (28, 29) dont les signaux de mesure sont appliqués à un circuit d'exploitation (35),

dynamomètre caractérisé en ce que l'espace creux (12) comporte, au moins dans la zone des bobines (28, 29), un revêtement (30) en un matériau magnétoélastique, en ce qu'au moins une bobine (28, 29) est respectivement associée aux différentes zones de sollicitation mécanique, en ce que les bobines (28, 29) forment conjointement avec respectivement un condensateur (34, 34a) un circuit oscillant parallèle autonome, en ce que les circuits oscillants font partie du circuit électrique d'exploitation (35), et en ce que les valeurs des résistances (37 ou 37a) associées en amont aux bobines (28, 29), les inductions et les valeurs de résistance ohmique des bobines (28, 29), les capacités des condensateurs (35 ou 35a), ainsi que la fréquence de la source de tension alternative (36), sont accordées les unes aux autres conjointement avec la couche (30) de façon qu il en résulte une courbe caractéristique linéaire.

2. Dynamomètre selon la revendication 1, caractérisé en ce que les bobines (28, 29) recouvrent, au moins partiellement, le revêtement (30) et ont en direction axiale de l'alésage (12) une distance constante par rapport au revêtement (30).

3. Dynamomètre selon la revendication 1 et/ou la revendication 2, caractérisé en ce que la géométrie des bobine (28, 29) est de forme circulaire ovale ou rectangulaire.

4. Dynamomètre selon une des revendications 1 à 3, caractérisé en ce que les bobines (55, 56) sont bobinées transversalement à l'axe de l'élément de construction (11).

5. Dynamomètre selon une des revendications 1 à 4, caractérisé en ce que le revêtement magnétoélastique (30) est constitué de préférence d'un alliage Fe-Ni avec un rapport de mélange de 45/55.

6. Dynamomètre selon une des revendication 1 à 5, caractérisé en ce qu'un même nombre de bobines (28, 29) est associé aux zones de revêtement (30) qui sont exposées à des contraintes mécaniques opposées (contraintes de traction ou de compression).

7. Dynamomètre selon la revendication 6, caractérisé en ce que ce dynamomètre comporte deux bobines (28, 29) qui sont diamétralement opposées.

8. Dynamomètre selon une des revendications 1 à 7, caractérisé en ce que les bobines (55, 56) sont chacune bobinées sur un corps de bobine (57, 58) de section transversale semi-circulaire.

9. Dynamomètre selon une des revendications 1 à 8, caractérisé en ce que les bobines (28, 29 ou 55, 56) sont alimentées avec une tension alternative de fréquence élevée (haute fréquence).

FIG.1A

FIG.1

# FIG. 2

EP 0 259 558 B1

FIG. 3

B

31

b

52

56

12

55

53

54

B

FIG. 3A

57

a

30

58

EP 0 259 558 B1